Europäisches Patentamt

European Patent Office

Office européen des brevets

(11) Publication number: **0 193 333**
A1

# EUROPEAN PATENT APPLICATION

(21) Application number: 86301106.0

(22) Date of filing: 18.02.86

(51) Int. Cl.⁴: **G 02 F 1/015**
G 02 F 1/35, G 02 F 3/00
G 02 B 6/12

(30) Priority: 28.02.85 JP 39900/85

(43) Date of publication of application:
03.09.86 Bulletin 86/36

(84) Designated Contracting States:
DE GB NL

(71) Applicant: TOKYO INSTITUTE OF TECHNOLOGY
12-1 Ohokayama 2-chome Meguro-ku
Tokyo(JP)

(72) Inventor: Suematsu, Yasuharu
450-48 Ohzenji Aso-ku
Kawasaki City Kanagawa Pref.(JP)

(74) Representative: Barnard, Eric Edward et al,
BROOKES & MARTIN High Holborn House 52/54 High
Holborn
London WC1V 6SE(GB)

(54) Devices with controllable light wave guides.

(57) A device usable as a light circuit function element, such as a switch, has a controllable light wave guide formed as an extremely thin film multi-layer structure constituting a multi-quantum well (MQW). By applying an electric filed to the multi-quantum well with the aid of an electrode (26) the refractive index of the guide is changed to achieve some desired function.

*FIG. 1*

EP 0 193 333 A1

# DEVICES WITH CONTROLLABLE LIGHT WAVE GUIDES

## Field of the Invention

The present invention relates to devices, such as switching devices and directional couplers, with controllable light wave guides usable in a variety of applications in light wave communications for changing the path of a light beam.

## Background to the Invention

Hitherto, a light wave guide which can be controlled to vary its refractive index to alter the path of a light beam are either a thin-film light wave guide, using electro-optical crystals such as $LiNbO_3$ or a device wherein the refractive index is altered by current injection. Thin-film light wave guides of known type are disadvantageous in that the variation of the refractive index differs according to the direction of crystallization and in that the miniaturization is difficult since the necessary mirror-forming electrodes must be situated on the surface of the device. Wave guides which rely on current injection are disadvantageous in that the response speed is not high because the variation of the refractive index is determined by an increase or decrease of the carrier density.

It is an object of the present invention to provide an improved form of device usable as a light circuit function element, for instance, as a light modulator or switch, having a high response speed for the variation of the refractive index as compared with known devices and having the capability of significant miniaturization.

## Summary of the Invention

In one aspect the present invention provides a device usable as a controllable light wave guide composed of an extremely thin film multi-layer structure forming a multi-quantum well. A change in electric field in the multi-quantum well causes a variation of the refractive index.

0193333

A light wave or signal can thus be controlled by varying the electric field in a controlled manner.

A light switching device constructed in accordance with the invention may comprise at least one light wave guide composed of an extremely thin film multi-layer structure forming a multi-quantum well embodied in a block with at least one input, at least two outputs and a control electrode which receivies a variable voltage which is used to vary a electric field in the multi-quantum well whereby to alter the refractive index of the guide to switch the light from one output to the other and vice versa.

A light switching device may also comprise first and second light wave guides, which intersect one another over a region composed of at least one extremely thin film multi-layer structure forming a multi-quantum well, an input for introducing light into the device and outputs for emitting the light from the device in different directions and a control electrode which serves to create an electric field in the multi-quantum well which can be altered to change the refractive index of the intersecting region of the guides in response to the voltage applied to the control electrode to change the output from which light is emitted.

A switching system with a network of individual guides forming groups of inputs and outputs can be constructed with the guides intersecting in a lattice like fashion with extremely thin film multi-layer structures forming multi-quantum wells at the intersections. By applying voltages to the intersecting regions light signals can be diverted from any one or more of the collective inputs to any one or more of the outputs. It is not necessary in all cases to have the guides intersecting. In a directional coupler, for instance, guides constructed as aforesaid have regions extending side-by-side and light can be diverted from one guide to the other by varying the electric field in the multi-quantum well as before.

Communications systems of various types can be created with light switches constructed in accordance with the invention operated in synchronism to establish communication via a common link or line.

The present invention may be understood more readily, and various other aspects and features of the invention may become apparent, from consideration of the following description.

Brief Description of drawings

In the accompanying drawings:

Figure 1 is a cross-sectional representation of a device constructed in accordance with the present invention;

Figures 2 and 3 are diagrams showing the variation in potential across the extremely thin film multi-layer structure of the device constructed in accordance with the invention;

Figure 4 is a diagram showing the variation of a wave function in the well of the device;

Figure 5 is a diagram showing the variation of the refractive index $\Delta n/n$ (%) against the variation of the electric field strength in the device;

Figure 6 is a perspective view of the device adapted as a light switch;

Figure 7 is an enlarged plan view of the electrode portion of the device of Figure 6;

Figure 8 is a cross-sectional view of a semiconductor representing devices constructed in accordance with the invention;

Figure 9 is a diagram showing voltage characteristics of the light switching device of the present invention;

Figure 10 is a diagram showing the response characteristics of the light switching device;

Figure 11 is a diagrammatical representation of a directional coupler constructed in accordance with the present invention;

Figure 12 is a cross-sectional view of the coupler in Figure 11;

Figures 13, 14 and 15 are representations of communications and switching systems constructed in accordance with the present invention.

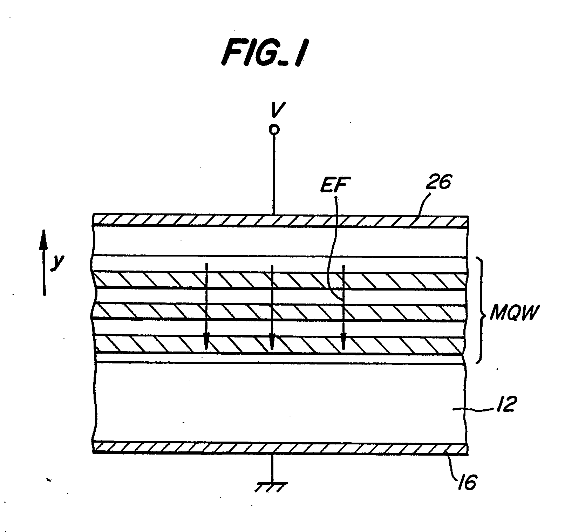

Figure 1 shows a device in the form of a controllable light wave guide constructed in accordance with the invention. The device employs a multi-quantum well MQW in the form of an extremely thin film multi-layer semiconductor structure provided on a semiconductor substrate 12. A typical construction has alternate films of different semiconductors such as GaAs and GaAlAs or GaInAsP and InP. The thickness of each film is 10-500Å and the total number of films is the range 10-200. The device also employs electrodes 16, 26 to which a control voltage can be applied. As shown electrode 16 is grounded and electrode 26 is connected to a voltage V. The arrow EF in the multi-quantum well MQW shows the direction of the applied electric field.

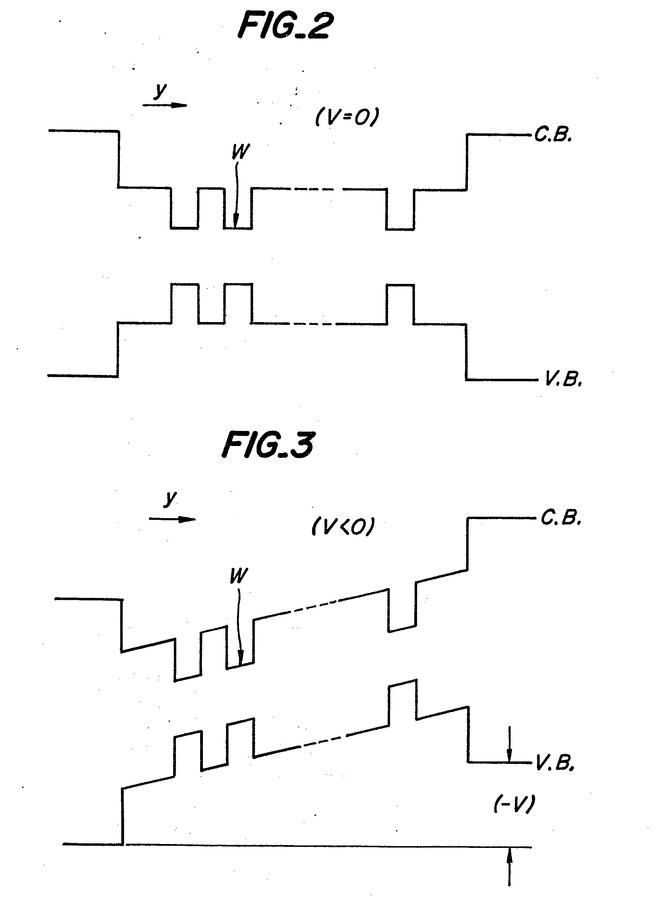

Figure 2 shows a potential distribution of the multi-quantum well MQW in the direction of the arrow y of Figure 1, i.e. through the cross-section in a direction normal to thin film multi-layer structure. In Figure 2, the upper curve C.B. designates the "conduction band" and the lower curve V.B. designates the "valence band". In the multi-quantum well MQW, narrowed portions of the both bands C.B. and V.B. are formed at the positions of the respective thin films. Each narrowed portion is termed a "well" and designated by W. Figure 2 shows a case in that the applied voltage V to the electrode 26 is zero, i.e. V=0 and no electric field EF is present in the multi-quantum well MQW. In this case, the potential distribution of the both bands C.B. and V.B. extends horizontally.

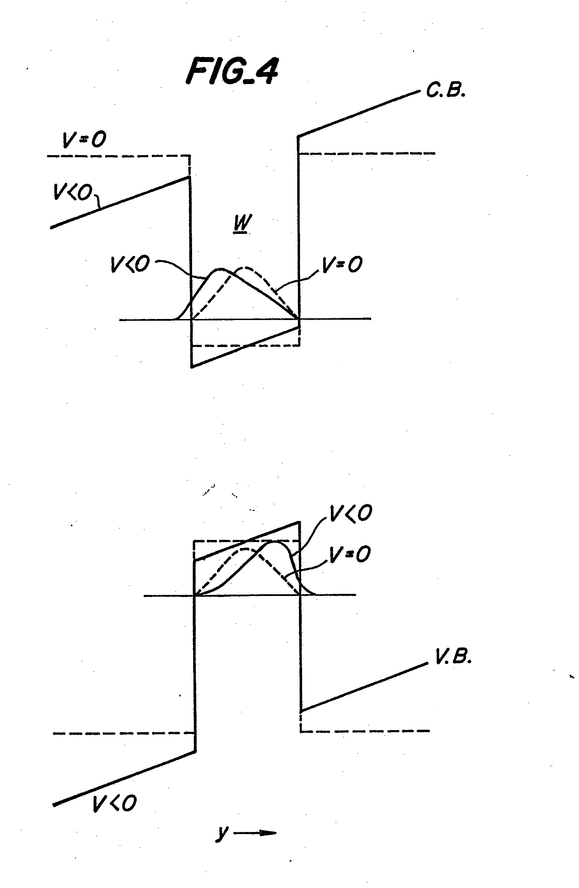

Figure 3 shows the situation when a voltage V is applied to the electrode 26 i.e. V<0 in this case. The voltage V (V<0), creates an electric field in the y direction i.e. in the direction of thickness of the extremely thin films and the potential distribution thereof adopts the inclination as shown in Figure 3.

Figure 4 shows the portion of the well W of Figures 2 and 3 on an enlarged scale. By applying an electric field to the multi-quantum well MQW, the wave functions of electrons in the well W are influenced and in the drawing, the wave form curves in the well W represent the wave functions, of which the dotted lines signifies V=O and the full lines indicate a case of V≠O i.e. V<0 in the illustrated case. By the deviation of the wave functions of the electrons and holes and by the variation of the energy level, the refractive index at the wells W of the multi-quantum well MQW varies. Due to this phenomenon, light passed through the multi-quantum well MQW can be reflected or diverted in a different direction.

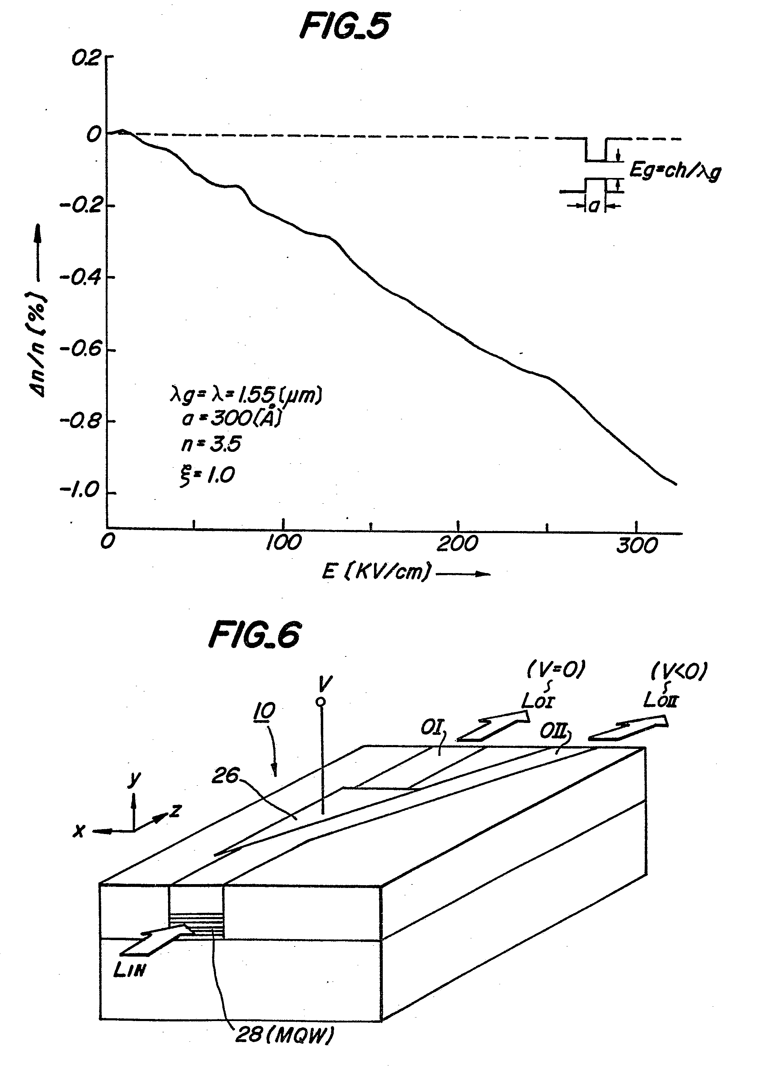

Figure 5 shows the relationship between the variation of the refractive index and the applied electric field strength. In Figure 5, the electric field strength E (KV/cm) is taken on the abscissa and the rate of variation of the refractive index $\Delta n/n$ (%) is taken on the ordinate. In Figure 5:

$\lambda$ g denotes the wavelength of forbidden band width

a denotes the width of a well

n denotes the refractive index and

$\xi$ denotes the optical confinement factor

As can be seen from Figure 5, the refractive index n decreases ($\Delta n$) as the electric field strength E becomes larger.

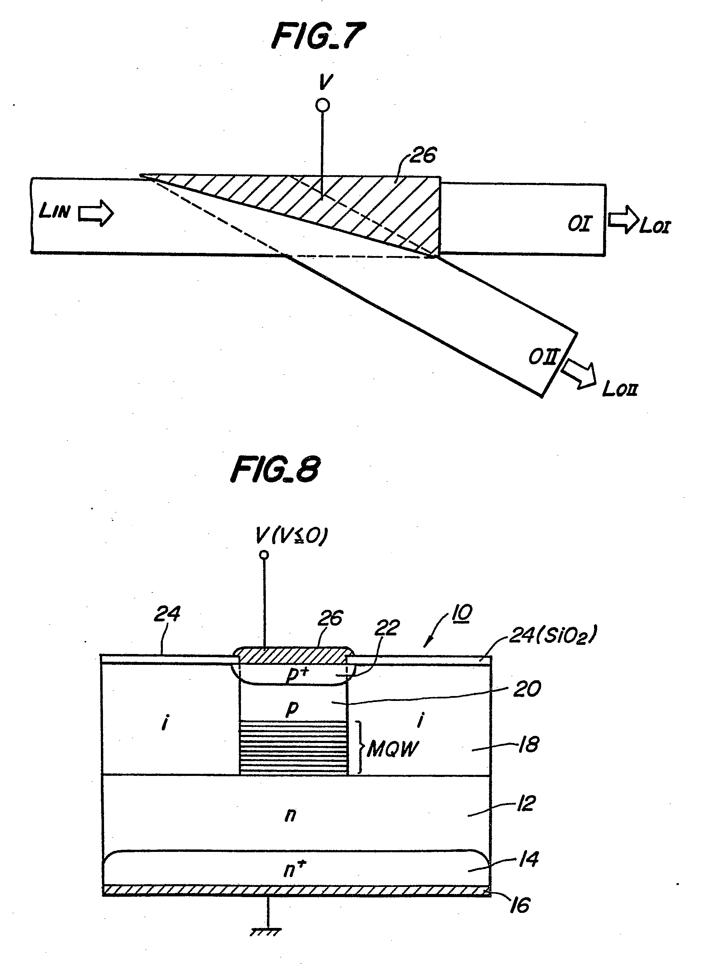

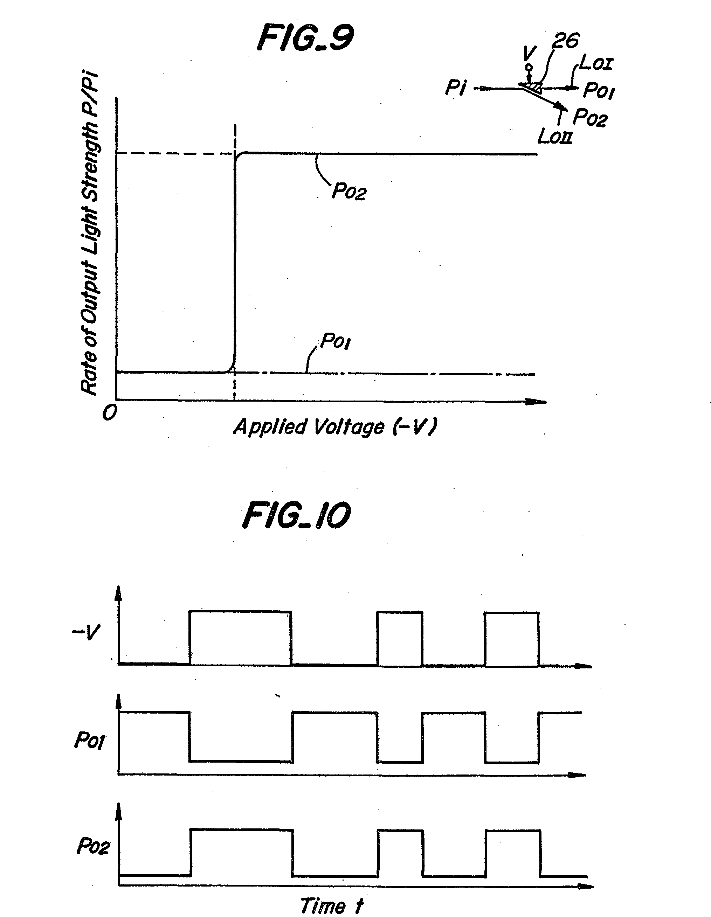

Figure 6 shows one embodiment of a device according to the present invention (usable as a light switch) in perspective view. Figure 7 is a plan view of the control electrode region of the device and Figure 8 can be taken as representing a cross-sectional view of the electrode region of the switching device or other device using the multi-quantum well MQW light guide.

In Figures 6 to 8, the reference numeral 10 designates the general structure of the light switching device and MQW again designates the multi-quantum well having the extremely thin film multi-layer structure effectively forming two alternative output guide paths OI and OII for light.

Figure 8 shows the device in more detail. The semiconductor substrate 12 is of n-type and an $n^+$ layer 14 having high impurity concentration is located between the substrate 12 and the electrode 16 at the base of the device which is at earth potential. Reference numeral 18 designates an insulator layer, 20 is a p-type layer and 22 is a $p^+$ type layer, an insulating layer 24 ($SiO_2$) is provided at the upper region of the device except for the electrode connection of the $p^+$ layer 22. The electrode 26 is provided over the $p^+$ layer 22 and voltage V; (V<0) is applied thereto. This voltage V is used in a reverse bias condition but it is possible to adopt an inverse semiconductor structure with p-type substrates 12, 14 and n-type substrates 29, 22 and to adopt a positive bias voltage (V>0). As shown in Figures 6 and 7, if the applied voltage V to the electrode 26 is 0, i.e. V=0, light $L_{IN}$ injected into the well MQW from one end of the device forming an input 28 propagates linearly from the input 28 though the light wave guide and is emitted as output light $L_{OI}$ from the light output path OI. When the applied voltage V is changed as V≠0, i.e. (V<0), the refractive index of the light wave guide in the region located below the electrode 26 shown in Figure 7 becomes smaller and the incident light is diverted to emerge as light output LOII from the light output path OII. Thus by controlling the voltage V the input Lin can be switched between the outputs LOI, LOII.

The response speed of this device is substantially higher than the conventional system using relaxation time of electrons in the energy band. Figure 9 shows the relationship between the applied voltage V, i.e. (V<0) and the ratio of the output light intensity P/Pi; wherein Pi is the light intensity of the input ight, $P_{o1}$ is the light intensity of the output light $L_{OI}$ at the output of the first light wave guide OI and $P_{o2}$ is the light intensity of the output light $L_{OII}$ at the output of the second light wave guide OII. High speed switching between the light wave guides is possible for a small change in applied voltage as can be seen from Figure 9. Figure 10 depicts the response time characteristics with the time t plotted on the abscissa. As can be seen, the first light output signal $L_{OI}$ is cut off by the application of the voltage -V to the electrode 26 and the second light output $L_{OII}$ is established. Conversely, by making the applied voltage zero (V=0), the first light output signal $L_{OI}$ is established and the second light output signal $L_{OII}$ is cut-off.

Several practical applications of the device will now be described.

In Figure 13 a plurality of light wave guide switching devices constructed in the manner shown in Figures 6 to 7 are arranged as a lattice network. Each of the circles SW shown at junctions of the ight wave guides is a light switching device. In this hybrid system a light signal group consisting of a number of first light signals transmitted from a number of first light inputs INPUT-1 and a number of second light signals transmitted from a number of second light inputs INPUT-2 can be switched severally and collectively between groups of outputs OUT-1, OUT-2.

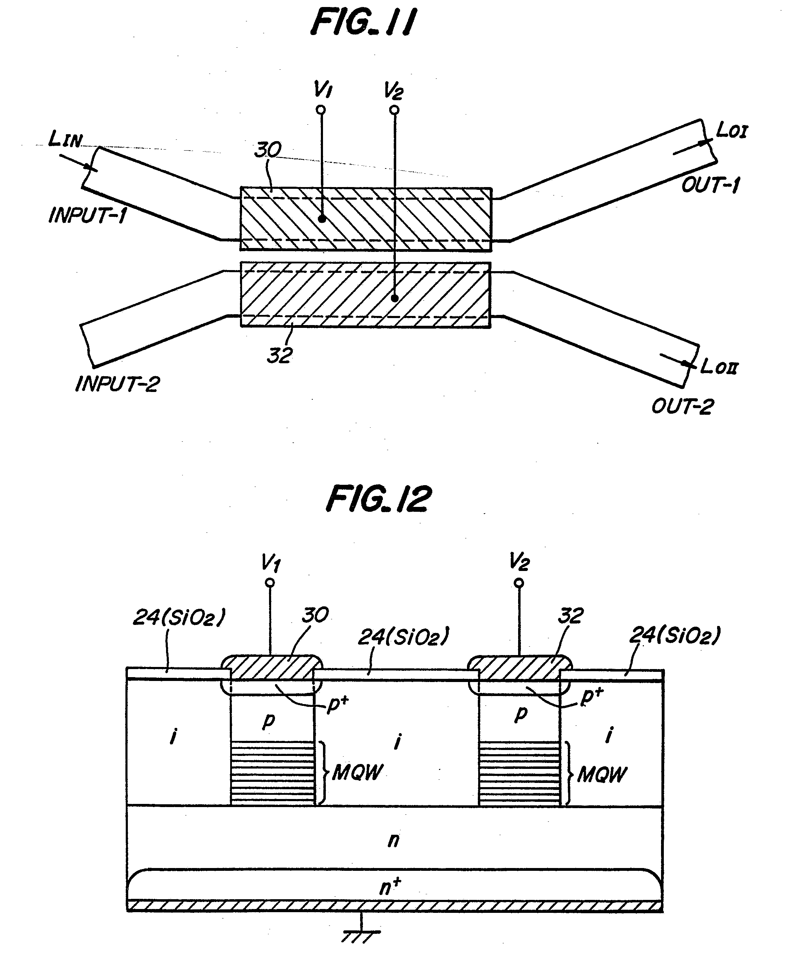

In Figures 11 and 12 two light wave guides constructed as described previously, are arranged to extend partly parallel and side-by-side as shown. By varying the refractive index and hence the propagation constant of the two light wave guides with the voltages $V_1$, $V_2$ applied to control electrodes 30, 32, the light wave guides can be switched based on the general principle of a directional coupler. As appears from a comparison between Figures 8 and 12 the coupler is constructed in a similar fashion to the basic switching device.

When an incident light $L_{IN}$ at INPUT I is propagated in the first light wave guide, a voltage $V_1$ applied to the control 30 of the first guide and a voltage $V_2$ applied to the control electrode 3I of the several guide are suitably selected to cause a difference in the propagation constants of the two light wave guides over the parallel portions and by this incident light may be guided to emerge as a LOl at the output OUT-1 or LOII at the ouput OUT-2. Similarly incident light at INPUT I can be transferred from OUT-2 to OUT-1 and vice versa.

For example:

$$V_1 : off \quad )$$
$$V_2 : off \quad ) \qquad ) \quad L_{IN} \rightarrow L_{OI}$$

$$V_1 : on \quad )$$
$$V_2 : off \quad ) \qquad ) \quad L_{IN} \rightarrow L_{OII}$$

The above explained embodiment is just one example of a practical application of the present invention, and the operating conditions may be different according to the voltages $V_1$ and $V_2$ and the shape of the coupler.

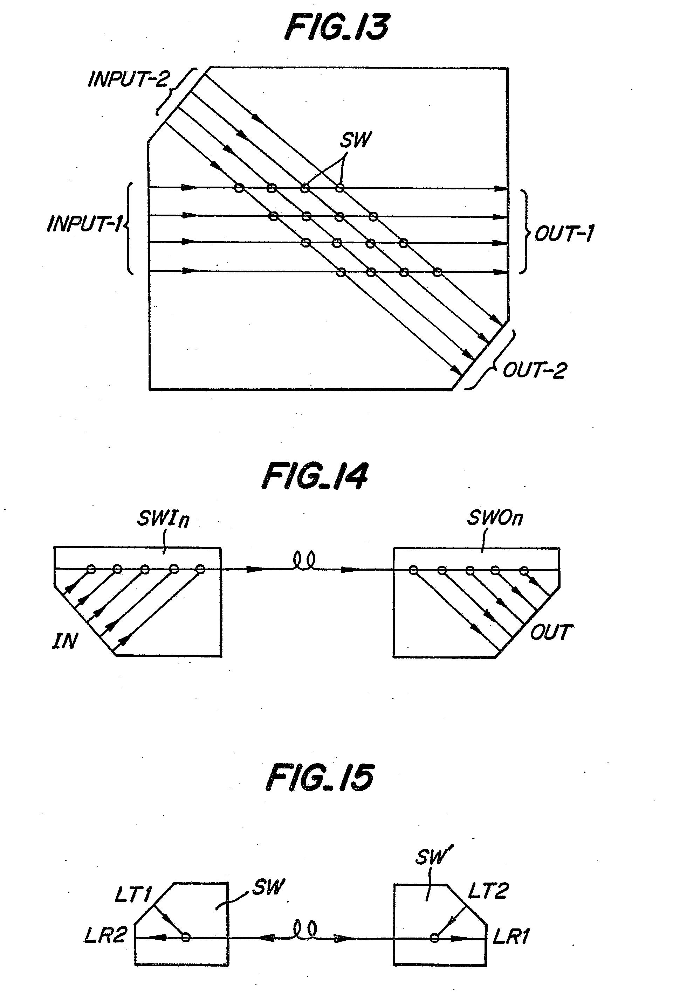

Figure 14 shows diagrammatically a system for effecting time sharing light communication. Here a group of input's IN are connected to a common transmission line or link via switching devices indicated by the circles and this line or link is connected via further switching devices to a group of outputs OUT. By switching the light switches SWIn at the input side and the light switches SWOn at the output side in synchronism, time sharing or time division light communication may be effected.

Based on the same principle, by synchronizing operation of the light switches in the transmitter side and in the receiving side, two-way communication of signals can be effected simultaneously by using a single light communication link or line and Figure 15 shows such an embodiment. In Figure 15, $LT_1$ is a first transmitting light signal, $LR_1$ is a first receiving light signal at the remote side, $LT_2$ is a second transmitting signal sent from the remote side, and $LR_2$ is a second receiving light signal. SW and SW' designate light switches operating in synchronism.

10                                                    0193333

CLAIMS

1.    A device usable as a controllable light wave guide at least in part; said device being composed of an extremely thin film multi-layer structure forming a multi-quantum well, a variation in the refractive index of the well being effected by means of a change in electric field.

2.    A device according to claim 1, wherein the multi-layer structure is combined with semiconductor substrates and layers (16, 14, 12, 18, 24).

3.    A light switching device comprising at least one light wave guide  composed of an extremely thin film multi-layer structure forming a multi-quantum well (MQW) said device being embodied in a block (10) with at least one input (IN) and at least two outputs (LOI, LOII) and a control electrode (26) which receives a variable voltage which is used to vary an electric field in the multi-quantum well whereby to alter the refractive index of the well to switch the light from one ouput (LOII) to the other (LOI) and vice versa.

4.    A light switching device comprising first and second light wave guides which intersect one another over a region composed of at least one  extremely thin film multi-layer structure forming a multi-quantum well (MQW), an input (Lin) for introducing light into the device and outputs (LOI, LOII) for emitting the light from the device in different directions and a control electrode (26) which serves to create an electric field in the multi-quantum well (MQW) which can be altered to change the refractive index of the intersecting region of the guides in response to the voltage applied to the control electrode to change the output from which light is emitted.

5.    A device according to claim 3 or 4 wherein the voltage applied to the electrode to select one output is zero and the voltage applied to the electrode to select the other output is a non-zero value.

6.    A directional coupler for changing the path of light inputs to one or other of two outputs; said device comprising first and second light guides each composed of an extremely thin film multi-layer structure forming a multi-quantum well (MQW), the guides having regions extending parallel to one another wherein each guide has a control electrode (30, 32) to which a voltage is applied to create an electric field in the multi-quantum well of the guide which can be varied to alter the propogation constant of the guide whereby the voltages are controlled to cause light to transfer from one guide to the other to emerge from one or other of the outputs.

7. A light switching system comprising a first group of light inputs (INPUT 1) connected via light wave guides to a first group of light outputs (OUT-1), a second group of light inputs (INPUT 2) connected via light wave guides to second group of light outputs (OUT 2), wherein the light guides intersect (SW) and include extremely thin film multi-layer structures forming multi-quantum wells (MQW) the intersecting regions having control electrodes for receiving voltages used to create an electric field in the multi-quantum wells which can be altered to connect selectively any one of the first or second groups of light inputs to any one of the first and second groups of light outputs.

8. A light communications system comprising a plurality of light inputs (IN) connected via switchable light wave guides each composed of an extremely thin film multi-layer structure forming a multi-quantum well (MQW) with a common communication link, a plurality of light outputs (OUT) connected via switchable light wave guides each composed of an extremely thin film multi-layer structure forming a multi-quantum well (MQW) with said communication link, wherein the switchable light wave guides employ control electrodes to create electric fields in the multi-quantum wells which are altered to connect any one of inputs to a selected output.

12

0193333

9. A system according to claim 8, wherein the switchable guides are synchronously operated to realise time sharing multiple light communications.

10. A light communications system comprising a first light transmitter (LT1) connected via a first switchable light wave guide composed of an extremely thin film structure forming a multi-quantum well (MQ) with a common communications link, a first light receiver (LR1) connected via a second switchable light wave guide composed of an extremely thin film structure forming a multi-quantum well (MQW) with said communications link, a second light transmitter (LT2) connected via the second switchable light wave guide with said communications link and a second light receiver (LR2) connected via the first switchable light wave guide with said communications link, wherein the switchable light wave guides employ control electrodes to create electric fields in the multi-quantum wells which are altered to connect the first transmitter (LT1) to the first receiver (LT1) or the second transmitter (LT2) to the second receiver (LR2).

11. A system according to claim 10, wherein the first transmitter (LT1) is combined with the second receiver (LR2) and the first receiver (LR1) is combined with the second transmitter (LT2) and the light wave guides are operated synchronously to realise two-way light communications.

# FIG. 1

## FIG.2

$y \longrightarrow$

$(V=0)$

W

C.B.

V.B.

## FIG.3

$y \longrightarrow$

$(V<0)$

W

C.B.

V.B.

$(-V)$

## FIG.4

0193333

# FIG.5

$$\lambda g = \lambda = 1.55 \ (\mu m)$$
$$a = 300 \ (\mathring{A})$$
$$n = 3.5$$
$$\xi = 1.0$$

$Eg = ch/\lambda g$

# FIG.6

## FIG_7

## FIG_8

# FIG.9

# FIG.10

Time t

# FIG. 11

# FIG. 12

0193333

## FIG.13

INPUT-2

SW

INPUT-1

OUT-1

OUT-2

## FIG.14

SWIn

SWOn

IN

OUT

## FIG.15

LT1

SW

SW'

LT2

LR2

LR1

European Patent
Office

EUROPEAN SEARCH REPORT

0193333

## DOCUMENTS CONSIDERED TO BE RELEVANT

EP 86301106.0

| Category | Citation of document with indication, where appropriate, of relevant passages | Relevant to claim | CLASSIFICATION OF THE APPLICATION (Int. Cl.4) |
|---|---|---|---|
| X | IEEE JOURNAL OF QUANTUM ELECTRONICS, vol. QE-21, no. 2, February 1985, T.H. WOOD et al. "131ps Optical Modulation in Semiconductor Multiple Quantum Wells (MQW's)" Manuscript received July 11, 1984 pages 117-118 <br> * Totality * | 1,2 | G 02 F 1/015 <br> G 02 F 1/35 <br> G 02 F 3/00 <br> G 02 B 6/12 |
| A | | 4,5,7, 8,10 | |
| Y | | 3,5,6 | |
| | -- | | |
| X,P | EP - A1 - 0 143 000 (BRITISH TELECOMMUNICATIONS) <br> * Fig. 1-5; page 1, line 16 - page 4, line 34; claims 1,4 * | 1,2 | |
| A | | 3-4,7, 8,10 | TECHNICAL FIELDS SEARCHED (Int. Cl.4) |
| Y | | 5,6 | G 02 F 1/00 <br> G 02 F 3/00 <br> G 02 B 6/00 |
| | -- | | |
| X,P | EP - A2 - 0 155 802 (AMERICAN TELEPHONE) <br> * Fig. 5-7,9-11,27; page 7, line 15 - page 10, line 15; page 12, line 3 - page 13, line 15 * | 1,2,6 | |
| | -- | | |
| Y | CH - A5 - 588 087 (INTERNATIONAL STANDARD) <br> * Fig. 1; claims * | 3 | |
| | -- | | |

The present search report has been drawn up for all claims

| Place of search | Date of completion of the search | Examiner |
|---|---|---|
| VIENNA | 11-06-1986 | GRONAU |

**EUROPEAN SEARCH REPORT**

European Patent
Office

-2-

| | DOCUMENTS CONSIDERED TO BE RELEVANT | | EP 86301106.0 |
|---|---|---|---|

| Category | Citation of document with indication, where appropriate, of relevant passages | Relevant to claim | CLASSIFICATION OF THE APPLICATION (Int. Cl.4) |
|---|---|---|---|
| Y | FR - A1 - 2 533 714 (THOMSON)<br>* Fig. 3; abstract * | 5,6 | |
| A | WO - A1 - 84/03 363 (AMERICAN TELEPHONE)<br>* Fig. 1-3,33,39,41; page 3, line 26 - page 5, line 7; page 32, line 40 - page 33, line 30; page 36, line 27 - page 40, line 20 * | 1-8,10 | |
| A | DE - A1 - 3 210 980 (NIPPON)<br>* Fig. 8-12; claims * | 7,8,10 | |
| A | EP - A1 - 0 130 650 (LABORATOIRES D'ELECTRONIQUE)<br>* Fig. 5 * | | |
| | | | TECHNICAL FIELDS SEARCHED (Int. Cl.4) |

The present search report has been drawn up for all claims

| Place of search | Date of completion of the search | Examiner |
|---|---|---|
| VIENNA | 11-06-1986 | GRONAU |